# EUROPEAN PATENT APPLICATION

(11) **EP 1 875 803 A2**
(43) Date of publication of application: **09.01.2008**
(21) Application number: 07110948.2
(22) Date of filing: 25.06.2007
(51) Int. Cl.: A01N 25/02, A01N 25/30, A01N 43/653, A01N 47/18, A01P 3/00

(54) **Agrochemical composition, use and application method of an agrochemical composition**

(30) Priority: 26.06.2006 BR PI0602819
(71) Applicant: Oxiteno S.A. Industria e Comercio, 01317-910 Sao Paulo SP (BR)
(72) Inventor: Lopes Moreno, Valter, Cep 09380-620, Santo André - SP (BR)
(74) Representative: Carpintero Lopez, Francisco

(57) **Abstract**

This invention relates to an agrochemical composition, comprising an anticrystallizing agent both in the concentrated formulation and after its dilution into water to prepare the spray broth. Said composition comprises (a) a pesticide, (b) a straight or branched chain, saturated or unsaturated fatty alcohol containing from 6 to 20 carbon atoms, (c) a straight or branched chain, saturated or unsaturated sulfonic acid and/or salts thereof, (d) a straight or branched chain, saturated or unsaturated ethoxylated fatty ester, and (e) an alkoxylate. This invention also relates to the use of this agrochemical composition and method for the application thereof.

## Description

### FIELD OF THE INVENTION

This invention relates to an agrochemical composition comprising fatty alcohols and surfactants, wherein said composition has an anticrystallizing agent effective both in the concentrated formulation and after its dilution into water to prepare the spray mix. This invention also relates to the use of such composition as a pesticide, as well as method for the application thereof to the place to be treated.

### SCOPE OF THE INVENTION

The protection of crops against fungi and other pests requires the application of chemicals which protects or combats directly the causing agent. These products are called agrochemicals. Agrochemicals are shown in formulations comprising an active ingredient (pesticide) and a mixture of other inert agents aiming at ensuring the biological efficacy of the formulation.

By way of example of pests impacting the crops are *Phakopsora pachyrhizi* fungus, which affects the soybean, and the disease caused is known as "soybean rust". According to estimates, more than 75% of such crops may be affected if this pathogen is not controlled. The prevention and treatment against the infestation of these pests is made by the application of a fungicide-containing agrochemical.

Agrochemicals may be shown in the form of several formulations, such as: suspension concentrates (solids dispersed in liquids); soluble concentrates (active ingredients soluble in water); emulsifiable concentrates (concentrates forming an emulsion, when diluted in water) and others.

Tebuconazole, a compound of the triazole group, is a fungicide used to prevent and combat the Soybean rust. Said compound is commercially available in the form of emulsifiable concentrates.

"Emulsifiable concentrate" means a formulation comprising a pesticide (an active ingredient), a solvent and a mixture of surfactants aiming at ensuring the best performance and stability of the formulation by itself or when diluted in the form of emulsion to prepare the spray liquid.

The formulation of an emulsifiable concentrate is a challenge to the inventor who is to develop a stable product that is efficient agriculturally and feasible economically to control the disease, and several technologies can be used for its formulation. The pesticide must remain soluble into the concentrated formulation to form a spontaneous emulsion by diluting into water. Using pesticides of the triazole group is a challenge particularly difficult to overcome, since they are more likely to form crystals into water causing numerous difficulties during their application, which affects the fungicide action. For example, it is known that the use of aromatic solvents results in toxicity problems, inflammability and corrosion of rubbers.

The patent application No. PI9001572-0 and patents No. PI9101691-6 and PI9404456-2 disclose formulations to several pesticides, such as triazoles, using di-styryl phenol glycol ethers, fatty acid amides and phosphoric acid alkyl esters derivatives, aiming at ensuring the stability of the formulations and hindering the formation of crystals. However, fatty acid amides are used as solvents to formulate emulsifiable concentrates. These products have difficulties as to the corrosion of rubber in the spray system; the volatility of this type of solvent that may cause problems to the manipulator; and the possibility of causing phytotoxicity on crops resulting in the loss of productivity.

The patent application No. PI0403300-0 discloses a composition comprising a mixture of fatty acids esters mixed with ethoxylated fatty alcohols and solvent having the capacity to hinder the crystallization of pesticides in any diluted emulsion into pesticide compositions with low concentration of active ingredient of approximately 200 g/L.

At least one solvent, such as fatty acid methyl ester is necessary so that the formulations of this invention may make the active ingredient soluble. Embodiments are also disclosed using N-methyl-pyrrolidone as secondary solvent in addition to the said fatty acid methyl ester. However, the handling of N-methyl-pyrrolidone is very complicated, and C₈₋₁₀ fatty acid methyl ester uses a very rare natural carbon chain fraction presenting serious difficulties to the inventor of this composition.

The EP patent No. 0.391.168 uses N-alkyl-lactames to avoid the crystallization of active substances as fungicides. There are other publications suggesting the use heavy ketones or pyrrolidones as solvents to hinder the crystallization. However, these solvents are difficult to handle and they may present risks to the manipulator due to the high volatility.

The WO document 04/023875 describes a combination of fatty acids to make soluble the pesticide (for example, metconazole) in order to prepare a formulation soluble into water. This presentation of agrochemical is different from that common emulsifiable concentrate presentation to the triazole group fungicides forming an emulsion, when diluted into water. This document shows a fungicide solution which forms a solution diluted into water.

Therefore, avoiding the use of solvents, mainly aromatic solvents would be optimum.

Also, the existing agrochemical formulations show problems related to the obstruction of filters and application nozzles resulting from the formation of crystals or granulates. Another improvement of this invention is to reduce the phytotoxicity, a problem frequently correlated to the reduction in crop productivity.

In addition, the agrochemical composition comprising high concentrations of active ingredient, for example, about 250g/L or more are being continually formulated.

An agrochemical composition comprising high and low concentration of pesticide which avoids the formation of granulates, separations of phases or the formation of crystals in the agrochemical formulation and spray liquid has been developed in this invention. Besides, the composition of this invention is free from solvents and volatile and/or inflammable compounds, thus having a lesser level of toxicity and ecotoxicity.

Further, the composition according to this invention is agriculturally advantageous, since it allows to control effectively the infestation of diseases, without presenting phytotoxicity and, accordingly, having an optimum productivity.

### DESCRIPTION OF THE INVENTION

A first object of this invention relates to an agrochemical composition comprising:
(a) a pesticide;
(b) a straight or branched chain, saturated or unsaturated fatty alcohol containing from 6 to 20 carbon atoms;
(c) a straight or branched chain, saturated or unsaturated sulfonic acid and/or salts thereof;
(d) a straight or branched chain, saturated or unsaturated ethoxylated fatty ester having an ethoxylation degree varying from 1 to 100 moles; and
(e) an alkoxylate with the following chemical formula:

   **R₁(CH₂CH₂O)ₙ(CH₂CH(CH₃)O)ₘR₂**
wherein:
- R₁ is OH or ROH, wherein R is an alkyl group having 1 to 30 straight or branched, saturated or unsaturated carbon atoms,
- R₂ is H or an alkyl group having 1 to 30 carbon atoms, and
- m or n may be 0, since m + n is higher than or equal to 1

The pesticides (a) of the composition of this invention relate to synthetic or naturally extracted chemicals having a fungicidal, herbicidal, insecticidal, nematocidal and/or acaricidal action used in the control and/or prevention of weeds, diseases, pests and other carriers competing with the agricultural production.

Preferentially, said pesticide is a fungicide, particularly a compound of the triazole group, more particularly tebuconazole, propiconazole, epoxiconazole, tetraconazole, metconazole, ciproconazole, amitrol, azaconazole, bitertanol, bromoconazole, difenoconazole, diniconazole, fenbuconazole, fluquinconazole, flusilazole, flutriafol, hexaconazole, imibenconazole, ipconazole, paclobutrazole, penconazole, protioconazole, simeconazole, triadimefon, triadimenol, triazamatoe and/or triticonazole.

Another class of fungicides useful in this invention comprises benzimidazoles, such as benomyl, carbendazim, fuberidazole, tiabendazole and thiofanate-methyl.

Said pesticide can be added to in a quantity varying from 15 to 30% in weight, based on total weight of the composition. According to a preferred embodiment, said pesticide can be added to in a quantity from 20 to 25%.

Adequately, the concentration of said pesticide in composition of this invention is higher than 10 g/l, preferentially between 50 and 350 g/l, and more preferentially from 150 to 300 g/l. According to an even more preferred embodiment, said pesticide is present at a concentration from 200 to 250 g/l.

The fatty acid (b) according to composition of this invention may be naturally or synthetically derived. The alcohol function may be associated with the primary or secondary carbon.

By way of example of said fatty alcohol useful in this invention, it may be mentioned, without limitation, the hexanol, heptanol, 2-ethylhexanol, n-octanol, isononanol, n-decanol, isodecylic, undecylic, laurylic, isotridecylic, mirystic, pentadecanol, cethylic, heptadecanol, esthearylic, oleylic, linoleylic, linolenilyc, Guerbet alcohols, secondary fatty alcohols, or mixtures thereof.

The fatty alcohol may be ethoxylated or not. Adequately, it may show an ethoxylation degree varying from 0 to 6 EO.

The fatty alcohol can be added to in a quantity from 8 to 31 % in weight, based on total weight of the composition. According to a preferred embodiment, said fatty alcohol can be added to in a quantity from 20 to 30%.

According to this invention, the sulfonic acid (c) shows the general formula R-SO₃⁻H⁺, wherein R can be an alkyl, aryl or alkyl aryl group having from 1 to 30 carbon atoms. By way of example of sulfonic acids useful in this invention, it may be mentioned the branched dodecylbenzene (DDB) or straight dodecylbenzene (LAB) and branched or straight α-olefins, preferentially LAB. The sulfonic acids are used preferentially in the form of acid, but it is also possible to use the salts thereof, preferentially with bivalent cation, such as calcium or magnesium, preferentially calcium, or with univalent cation, such as lithium, and others.

The used quantity of said sulfonic acid is comprised of between 8 and 16% in weight, based on total weight of the agrochemical composition, preferentially 10 to 14%.

The ethoxylated fatty esters (d) used in this invention are derived from the reaction of saturated or unsaturated chain fatty acids with ethylene and/or propylene oxide, or esterification with polyoxyethylene or polyoxypropylene, or other alkoxylated polyols, such as ethoxylated/propoxylated glycerol, ethoxylated/propoxylated pentaerythritol, ethoxylated/propoxylated sorbitol and ethoxylated/propoxylated neopentilglycol.

Adequately, the used quantity of said ethoxylated fatty ester is comprised between 6 and 20% in weight, based on total weight of the agrochemical composition of this invention, preferentially from 8 to 12%.

The alkoxylates (e) may be ethoxylated and/or propoxylated fatty alcohols, and fatty alcohols obey the same description of the compound (b) of the composition of this invention. Monoethylene glycol, diethylene glycol, triethylene glycol, propylene glycol, dipropylene glycol, polyethylene glycols, polypropylene glycols, ethylene-polyoxide copolymers and propylene-polyoxide or a mixture thereof may also be used.

Preferentially, said alkoxylate is present in a quantity varying from 1 to 30% in weight, based on total weight of the agrochemical composition, more preferentially from 24 to 30%.

The agrochemical composition according to this invention may comprise additionally an oleic acid (f) as a surfactant. Preferentially, such oleic acid is derived from tail oil, and it may be present in a quantity comprised between 0.1 and 10% in weight, based on total weight of the composition. Said oleic acid provides an increase in resistance to the formation of crystals at low temperatures both in the emulsifiable concentrate and after the dilution into water.

Optionally, the agrochemical composition according to this invention comprises of bisphenol and/or its derivates (g). Said bisphenol increases the prevention of the formation of crystals, and it is used in this invention in a quantity between 0.1 and 10% in weight, based on total weight of the composition.

The preferred bisphenol compound according to this invention is Bisphenol A under the following chemical formula:

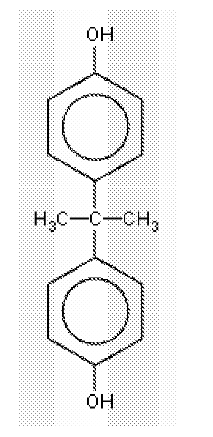

Bisphenol A is solid at room temperature, and a way to make it liquid is through the reaction with ethylene or propylene oxide, preferentially with propylene oxide. This modification makes its handling easier and meets the requirements of the invention.

By the combination between the compounds of the invention, it is possible to achieve a composition with the following advantageous characteristics:
- the production of a clear emulsifiable concentrate, free from particles, granulates or crystals at temperatures between, but not limited to this range, 0°C and 54°C, sufficient to ensure the stability of the concentrate during its period of storage prior to be used as a pesticide;
- the use up to 250 g/l of the pesticide; and
- the formation of a spontaneous emulsion following dilution up to 1.0% or more into water maintaining stable without separation of cream or oil, or the formation of crystals in the interval at temperature from 0°C to 30°C at concentrations up to 1% for periods more than 24 hours;

An advantage of the composition of this invention is to obtain an emulsifiable concentrate having the characteristics above comprising fatty alcohols, fatty acids, surfactants, alkoxylates and resins, i.e. it is substantially free from solvents, particularly aromatic solvents, for example, cumene, xylene, toluene, C₉ chain alkyl benzene and other volatile, inflammable solvents that are corrosive to metallic parts and rubbers of the spray equipment. In addition, it shows compounds that are not phytotoxic to the main crop and that are biodegradable.

Thus, the composition of this invention does not require the use of solvent, and advantageously concentrations up to 250g/L of active ingredient may be used, as indicated by the examples.

A second object of this invention relates to the use of composition of this invention as a pesticide. Said composition may be applied to agricultural and non-agricultural environments, such as plantations in general, crops, greenhouse, ornamental plants, vivarium, stored foods and fibrous products, cattle, pet animals and public and animal health.

Another object of this invention relates to the application method of composition of this invention comprising of applying the said composition to the place to be treated by any known mean.

This invention may be more clearly understood by reading the following examples, illustrating this invention without limitation.

### EXAMPLES

The Table 1 below shows examples of the embodied compositions according to this invention. All values are shown in percentages by weight, based on total weight of the final composition.

The results show that compositions comprising of concentrations up to 250 g/L of active ingredient, thus, more powerful compositions have been achieved showing satisfactory results.

**TABLE 1**

| **COMPONENT** | **Ingredient** | **1** | **2** | **3** | **4** | **5** | **6** | **7** | **8** | **9** | **10** | **11** | **12** | **13** | **14** | **15** | **16** | **17** |
|---|---|---|---|---|---|---|---|---|---|---|---|---|---|---|---|---|---|---|
| A | Tebuconazole 98.7% | 20.5 | 20.4 | 20.4 | 20.4 | 20.4 | 20.4 | 25.3 | 25.3 | 25.3 | 25.3 | 25.3 | 25.3 | 25.3 | 25.3 | 25.3 | 25.3 | 20.4 |
| | Carbendazim 96.0 % | - | - | - | - | - | - | - | - | - | - | - | - | - | - | - | - | 10.4 |
| B | 2-Ethylhexanol | - | 8.8 | 8.5 | 8.3 | 8.5 | 8.5 | 7.2 | 6.6 | 8.0 | 7.0 | 6.2 | 8.0 | 7.4 | 8.0 | 8.00 | 7.4 | 7.2 |
| | Isodecyl Alcohol | 34.5 | 25.8 | 24.8 | 24.2 | - | - | 21.1 | 19.3 | - | 20.6 | 18.3 | - | - | - | - | - | 21.7 |
| | Lauryl Alcohol | - | - | - | - | 24.8 | - | - | - | - | - | - | - | - | - | - | - | - |
| C | LABs | 10.0 | 8.7 | 8.40 | 8.2 | 8.4 | 17.1 | 14.0 | 13.0 | 16.0 | 13.6 | 12.3 | 16.0 | 12.8 | 16.0 | 16.0 | 12.8 | 7.0 |
| D | Surfom 1352 | 10.0 | 8.7 | 8.4 | 8.2 | 8.4 | - | 7.2 | 6.6 | - | 7.0 | 6.2 | - | 8.0 | - | - | - | 7.0 |
| | Surfom R 200 | - | 10.1 | 9.72 | 9.4 | 9.7 | - | 8.3 | 7.6 | - | 8.1 | 7.2 | - | | - | - | 8.0 | 7.9 |
| | Surfom R-360 | - | - | - | - | - | 13.5 | - | - | 12.7 | - | - | 12.7 | 11.7 | 12.7 | 12.7 | 11.7 | - |
| E | Unitol ID 60 | 25.0 | 17.5 | 16.8 | 16.4 | - | - | 14.3 | 13.1 | - | 14.0 | 12.4 | - | - | - | - | - | 14.0 |
| | Unitol L-90 | - | - | - | - | 16.8 | - | - | - | - | - | - | - | - | - | - | - | - |
| | Monoethylene glycol | - | - | - | - | - | - | - | - | - | - | - | 30.0 | - | - | - | 27.3 | - |
| | Diethylene glycol | - | - | - | - | - | 32.0 | - | - | 30.0 | - | - | - | 27.3 | - | - | - | - |
| | Propylene glycol | - | - | - | - | - | - | - | - | - | - | - | - | - | 30.0 | - | - | - |
| | Butyl glycol | - | - | - | - | - | - | - | - | - | - | - | - | - | - | 30.0 | - | - |
| F | Tail Oil | - | - | - | 2.5 | - | 4.3 | - | 4.3 | 4.0 | - | 6.0 | 4.0 | 3.7 | 4.0 | 4.0 | 3.7 | 2.2 |
| G | Bisphenol | - | - | 3.0 | 2.5 | 3.0 | 4.3 | 2.6 | 4.3 | 4.0 | 4.5 | 6.0 | 4.0 | 3.7 | 4.0 | 4.0 | 3.7 | 2.2 |
| | | - | - | - | - | - | - | - | - | - | - | - | - | - | - | - | - | - |
| | Appearance 25°C | OK | OK | OK | OK | OK | OK | OK | OK | OK | OK | OK | OK | OK | OK | OK | OK | OK |
| | Stability 0°C | SC | SC | SC | SC | SC | SC | SC | SC | SC | SC | SC | SC | SC | SC | SC | SC | SC |
| | 5°C | SC | SC | SC | SC | SC | SC | SC | SC | SC | SC | SC | SC | SC | SC | SC | SC | SC |
| | 25°C | SC | SC | SC | SC | SC | SC | SC | SC | SC | SC | SC | SC | SC | SC | SC | SC | SC |
| | 54°C | SC | SC | SC | SC | SC | SC | SC | SC | SC | SC | SC | SC | SC | SC | SC | SC | SC |
| | Liquid 0.20% 24h 0°C | SC | SC | SC | SC | SC | SC | SC | SC | SC | SC | SC | SC | SC | SC | SC | SC | SC |
| | ABNT Emulsion Test | OK | OK | OK | OK | OK | OK | OK | OK | OK | OK | OK | OK | OK | OK | OK | OK | OK |

| | | | | | | | | | | | | | | | | | | |
|---|---|---|---|---|---|---|---|---|---|---|---|---|---|---|---|---|---|---|
| OK: clear appearance without separation and emulsion, free from the formation of cream or separation of phases. SC: Without formation of crystals | | | | | | | | | | | | | | | | | | |

The following tests have been carried out so as to evidence the efficacy of the compositions described in Table 1. The evaluation and selection of the best agrochemical formulations require a differentiated methodology, and the tests illustrated below have been carried out for the development of the stable agrochemical formulations of this invention:

### TEST 1

### EVALUATION OF THE STABILITY OF AN AGROCHEMICAL FORMULATION TO TEMPERATURE

This test consisted of allowing a sample of the composition of this invention to stand for at least 90 days at a given temperature. It is known that the formation of crystals is favored by a sample allowed to stand at low temperatures (for example, 0 and 5°C). Also, it is known that the separation of unstable systems is favored by the application of high temperatures as 54°C. An evaluation at temperature of 25°C simulates the room temperature. These tests are hard to the stability of developed formulations, serving effectively as a selection factor.

### TEST 2

### EMULSION STABILITY

The emulsion stability formed by diluting the agrochemical formulation into water has been another evaluated important aspect. This test simulated the stability of the spray liquid.

The composition of this invention has been diluted to about 0.2 to 1.0%, and the stability of formulation has been evaluated with varying temperatures (0 and 30°C).

The emulsion stability at 30°C has been evaluated using the ABNT NBR 13452 method.

The stability of formulation at 0°C evaluated the spray broth stability at low temperatures. The spray broths have been exposed to low temperatures in certain regions by forcing the crystallization of the pesticide.

### TEST 3

### SIMULATION

The definition from among the examples by the best agrochemical composition has required the stability tests are carried out in the field and agricultural evaluations.

To simulate the application of agrochemical compositions under field operating conditions, 0.2% v/v (800 ml) of each composition was added to 400 ml of water. Each emulsion was stirred for 30 minutes following the recirculation of liquid within the hydraulic circuit of a Jacto sprayer, Advance AM-18S model, provided with a tank having a capacity of 2,000 L in polyethylene with an upper helix mechanical stirrer and piston pump with a pumping capacity of 100 L per minute.

The Examples 1 to 6 illustrated in Table 1 show the agrochemical compositions according to this invention with 20% of the pesticide tebuconazole. All compositions have been approved by the application tests carried out. Different fatty alcohols and ethoxylated fatty esters have been used, and among the alkoxylates, the natural and synthetic fatty alcohols and a diethylene glycol have been used. It must be observed that the tail oil and bisphenol are optional compounds to this concentration, as shown by the compositions 1 and 2.

The compositions 7 to 16 illustrated in Table 1 contain 25% of the pesticide tebuconazole. It must be observed that to ensure the stability to this higher concentration, the straight alkyl benzene sulfonic acid should be present at a higher concentration, and all compositions should contain a tail oil and bisphenol, the ingredients which increase the stability of the formulation against the tendency to form crystals. It must also be observed that glycols may be used (compositions 12 to 15), since it does not affect the stability.

The composition 17 shows a mixture containing 20% of tebuconazole and 10% of carbendazim showing that the stability of a mixture of two fungicides is ensured by the compositions used. In this case, the same components of the formulation 4 may be applied.

It may be concluded from the results of the tests carried out with the examples of agrochemical compositions that said compositions show an excellent physicochemical stability, liquid stability and optimum agricultural efficacy.

### COMPARATIVE EXAMPLE

Two preventive applications have been made 54 and 90 days following the planting of soybeans, with different formulations of the fungicide tebuconazole at the concentration of 200 g of active ingredient per liter of the commercial product, using an air-pressurized sprayer powered with sprayer bar containing 6 spray points XR 11002 operating at work pressure 0.2 MPa (2 bar) and volume equal to 1.6 x 10⁻⁵ m³/m² (160 L/ha).

The weather conditions at the moment of the first application (02/10/2006) are described in Table 2 and they were recorded using a hygrometer and digital anemometer. The second application of the respective formulations and dosages of tebuconazole was made on 03/10/2006 90 days following the planting at the moment of the reproductive development of plants. The weather conditions at the moment of the second application are also described in Table 2.

**TABLE 2**

| **TEMPERATURE, AIR RELATIVE HUMIDITY AND AIR VELOCITY ON THE APPLICATIONS OF FUNGICIDE TEBUCONAZOLE TO DIFFERENT FORMULATIONS AND DOSAGES ON THE SOYBEAN CROP (BOTUCATU, STATE OF SÃO PAULO**. **SEASON 2005/2006).** | | | |
|---|---|---|---|
| Application | Relative Humidity RH (%)* | Temperature (° C)* | Air velocity (km/h)* |
| 1^{a}. | 51.5 | 24.6 | 2.8 |
| 2^{a}. | 42.0 | 27.0 | 3.8 |

| | | | |
|---|---|---|---|
| * mean data. | | | |

The soybean crop has been harvested 144 days after the emergency (DAE), and the following production components have been evaluated: final population, total number of green beans, and final production per treatment (Table 3).

Two sample points of one meter each on the central lines of each parcel have been selected and the number of existing plants has been counted to determine the final population of plants. Fifteen sequential plants on two different lines have been gathered to determine the other production components, and the counting of each production component has been carried out by hand. The final productivity has been adjusted to the grain humidity at 13%.

The recommendation of 100g of active ingredient per hectare (1 x 10⁻⁵ Kg/m²) of the fungicide formulation has been used, i.e. this is the usual recommendation for this product. The Table 3 shows the final evaluations of the products in comparison with product tebuconazole 200 g/L that is a market reference using clearly a solvent.

**TABLE 3**

| **Treatment** | **Number of Green beans/plant** | **Weight of 100 grains (g)** | **Productivity (kg/ha)** |
|---|---|---|---|
| Formulation 1 | 46.25 | 13.8 | 3,182.25 |
| Formulation 4 | 43.50 | 14.5 | 3,047.25 |
| Formulation 6 | 44.50 | 13.8 | 2,937.25 |
| Formulation 8 | 50.00 | 14.6 | 3,095.50 |
| Formulation 11 | 46.00 | 14.3 | 3,193.25 |
| Formulation 12 | 48.00 | 13.3 | 3,076.25 |
| Tebuconazole 200 g/L market reference | 47.75 | 13.6 | 3,368.50 |
| Testimony | 42.00 | 11.3 | 2,268.50 |

The formulations 1, 4, 6, 8, 11 and 12 achieved a result equal and in some cases more than market reference formulation of Tebuconazole 200 g/L, and all such formulations are more than testimony with no treatment, confirming the agricultural efficacy.

It is apparent to those skilled in the art that a variety of modifications may be made without departing from the scope of this invention which is intended to be defined by the attached claims.

## Claims

1. AGROCHEMICAL COMPOSITION comprising:
(a) a pesticide;
(b) a straight or branched chain, saturated or unsaturated fatty alcohol containing from 6 to 20 carbon atoms;
(c) a straight or branched chain, saturated or unsaturated sulfonic acid and/or salts thereof;
(d) a straight or branched chain, saturated or unsaturated ethoxylated fatty ester having an ethoxylation degree varying from 1 to 100 moles; and
(e) an alkoxylate with the following chemical formula:
**R₁(CH₂CH₂O)ₙ(CH₂CH(CH₃)O)ₘR₂**
wherein:
- R₁ is OH or ROH, wherein R is an alkyl group having 1 to 30 straight or branched, saturated or unsaturated carbon atoms,
- R₂ is H or an alkyl group having 1 to 30 carbon atoms, and
- m or n may be 0, since m + n is higher than or equal to 1

2. COMPOSITION according to claim 1, wherein the pesticide is one or more synthetic or naturally extracted chemicals having a fungicidal, herbicidal, insecticidal, nematocidal and/or acaricidal action.

3. COMPOSITION according to claim 2, wherein the pesticide is a fungicide.

4. COMPOSITION according to claim 3, wherein the fungicide is a compound of the triazole or benzimidazole group.

5. COMPOSITION according to claim 4, wherein said fungicide is selected among the tebuconazole, propiconazole, epoxiconazole, tetraconazole, metconazole, ciproconazole, amitrol, azaconazole, bitertanol, bromoconazole, diphenoconazole, diniconazole, phembuconazole, fluquinconazole, flusilazole, flutriafol, hexaconazole, imibenconazole, ipconazole, paclobutrazole, penconazole, protioconazole, simeconazole, triadimefon, triadimenol, triazamatoe, triticonazole, benomyl, carbendazim, fuberidazole, tiabendazole and/or thiofanate-methyl compounds.

6. COMPOSITION according to one of the claims 1 to 5, wherein the pesticide is present between 15 and 30% in weight, based on total weight of the composition.

7. COMPOSITION according to claim 6, wherein the pesticide is present between 20 and 25% in weight, based on total weight of the composition.

8. COMPOSITION according to one of the claims 1 to 7, wherein the concentration of the pesticide in composition is between 10 g/l up to 350 g/l.

9. COMPOSITION according to claim 8, wherein the concentration of the pesticide is between 50 and 350 g/l.

10. COMPOSITION according to claim 9, wherein the concentration of the pesticide is between 150 and 300 g/l.

11. COMPOSITION according to claim 10, wherein the concentration of the pesticide is between 200 and 250 g/l.

12. COMPOSITION according to claim 1, wherein the fatty alcohol is selected among the compounds hexanol, heptanol, 2-ethylhexanol, n-octanol, isononanol, n-decanol, isodecylic, undecylic, laurylic, isotridecylic, miristic, penthadecanol, cethylic, heptadecanol, esthearylic, oleylic, linoleylic, linolenilyc, Guerbet alcohols, secondary fatty alcohols, or mixtures thereof.

13. COMPOSITION according to claim 12, wherein the fatty alcohol shows an ethoxylation degree varying from 0 to 6 EO.

14. COMPOSITION according to claim 1, wherein the fatty alcohol is present between 8 and 31 % in weight, based on total weight of the composition.

15. COMPOSITION according to claim 14, wherein the fatty alcohol is present between 20 and 30% in weight, based on total weight of the composition.

16. COMPOSITION according to claim 1, wherein the sulfonic acid shows the general formula R-SO₃⁻H⁺, wherein R can be an alkyl, aryl or alkyl aryl group having from 1 to 30 carbon atoms.

17. COMPOSITION according to claim 16, wherein the sulfonic acid is used in the form of acid or in the form of salts thereof with bivalent cation, such as calcium or magnesium, or with univalent cation, such as lithium.

18. COMPOSITION according to claim 17, wherein the sulfonic acid is a branched or straight dodecylbenzene or branched or straight α-olefins.

19. COMPOSITION according to claim 18, wherein the sulfonic acid is a straight dodecylbenzene.

20. COMPOSITION according to claim 1, wherein the sulfonic acid is present between 8 and 16% in weight, based on total weight of the agrochemical composition.

21. COMPOSITION according to claim 20, wherein the sulfonic acid is present between 10 and 14%.

22. COMPOSITION according to claim 1, wherein the ethoxylated fatty esters are derived from the reaction of saturated or unsaturated chain fatty acids with ethylene and/or propylene oxide, or esterification with polyoxyethylene or polyoxypropylene, or other alkoxylated polyols, such as ethoxylated/propoxylated glycerol, ethoxylated/propoxylated pentaerythritol, ethoxylated/propoxylated sorbitol and ethoxylated/propoxylated neopentilglycol.

23. COMPOSITION according to claim 1, wherein the fatty esters are present between 6 and 20% in weight, based on total weight of the agrochemical composition.

24. COMPOSITION according to claim 24, wherein the fatty esters are present between 8 and 12%.

25. COMPOSITION according to claim 1, wherein the alkoxylates are ethoxylated and/or propoxylated fatty alcohols, and the fatty alcohols are as defined in one of the claims 13 to 14.

26. COMPOSITION according to claim 25, wherein the alkoxylates are selected among the compounds monoethylene glycol, diethylene glycol, triethylene glycol, propylene glycol, dipropylene glycol, polyethylene glycols, polypropylene glycols, ethylene-polyoxide copolymers and propylene-polyoxide or a mixture thereof.

27. COMPOSITION according to claim 1, wherein the alkoxylates are present between 1 and 30% in weight, based on total weight of the agrochemical composition.

28. COMPOSITION according to claim 27, wherein the alkoxylates are present between 24 and 30%.

29. COMPOSITION according to one of the claims 1 to 28, comprising an oleic acid.

30. COMPOSITION according to claim 29, wherein such oleic acid is derived from tail oil.

31. COMPOSITION according to claim 29, wherein the oleic acid is present between 0.1 and 10% in weight, based on total weight of the composition.

32. COMPOSITION according to one of the claims 1 to 31, comprising a bisphenol and/or derivates thereof.

33. COMPOSITION according to claim 32, wherein said bisphenol and/or derivates thereof are present between 0.1 and 10% in weight, based on total weight of the composition.

34. COMPOSITION according to claim 33, wherein the bisphenol compound is bisphenol A.

35. COMPOSITION according to one of the claims 1 to 34, wherein such composition is substantially free from solvents.

36. USE OF THE AGROCHEMICAL COMPOSITION, as described in one of the claims 1 to 35, wherein such agrochemical composition is used as a pesticide.

37. USE according to claim 36, wherein such composition may be applied to agricultural and non-agricultural environmental, such as plantations in general, crops, greenhouse, ornamental plants, vivarium, stored foods and fibrous products, cattle, pet animals and public and animal health.

38. METHOD FOR THE APPLICATION OF AN AGROCHEMICAL COMPOSITION, as described in one of the claims 1 to 35, comprising a method for the application of a composition to the place to be treated by any suitable mean.
